# EUROPÄISCHE PATENTSCHRIFT

(11) **EP 0 550 451 B1**
(45) Veröffentlichungstag und Bekanntmachung des Hinweises auf die Patenterteilung: **08.03.1995**
(21) Anmeldenummer: 91914511.0
(22) Anmeldetag: 09.08.1991
(51) Int. Cl.: B60T 8/88

(54) **SCHALTUNGSANORDNUNG ZUR STEUERUNG VON ELEKTRISCHEN ODER ELEKTROMECHANISCHEN VERBRAUCHERN**
CIRCUIT FOR THE CONTROL OF ELECTRICAL OR ELECTROMECHANICAL DEVICES
CIRCUIT DE COMMANDE DE CONSOMMATEURS ELECTRIQUES OU ELECTROMECANIQUES

(30) Priorität: 12.09.1990 DE 4028926
(43) Veröffentlichungstag der Anmeldung: 14.07.1993
(73) Patentinhaber: ITT Automotive Europe GmbH, 60488 Frankfurt (DE)
(72) Erfinder: LORECK, Heinz, D-6270 Idstein 2 (DE); ZYDEK, Michael, D-6230 Frankfurt/Main 80 (DE); FEY, Wolfgang, D-6501 Wörrstadt (DE); JONES, Peter, D-6078 Neu Isenburg (DE); BLECKMANN, Hans, Wilhelm, D-6350 Bad Nauheim 3 (DE)
(86) Internationale Anmeldenummer: EP9101516
(87) Internationale Veröffentlichungsnummer: WO9204217

(56) Entgegenhaltungen:
- EP-A- 133 381
- DE-A- 3 136 944
- DE-A- 3 234 637
- DE-A- 3 447 449
- FR-A- 2 377 308

## Beschreibung

Die Erfindung bezieht sich auf eine Schaltungsanordnung zur Steuerung einer größeren Anzahl von elektrischen oder elektromechanischen Verbrauchern, z.B. der elektrisch angetriebenen Hydraulikpumpen, der elektromagnetisch betätigbaren Mehrwegeventile etc. eines Kraftfahrzeug-Regelungssystems, bei der die mit Hilfe einer Steuereinheit, z.B. einem Microprozessor oder Microcomputer, erzeugten Steuersignale über Verstärkerstufen den Verbrauchern zuführbar sind. Solche Steuerschaltungen werden vor allem für Antiblockiersysteme, Antriebsschlupfregelungssysteme und für Fahrwerksregelungen benötigt.

Nach der DE-OS 32 34 637 ist bereits eine Schaltungsanordnung dieser Art zur Steuerung einer blockiergeschützten Bremsanlage bekannt. Es werden Microprozessoren oder Microcontroller verwendet, mit denen aus Sensorsignalen, die die benötigten Informationen enthalten, Bremsdrucksteuersignale abgeleitet werden. Hierzu werden die Ausgangssignale der Microprozessoren über Verstärkerstufen elektromagnetisch betätigbaren Ventilen, die den Druckmittelfluß und damit den Bremsdruck beeinflussen, zugeleitet.

Für bekannte Systeme dieser Art werden acht und mehr Mehrwegeventile benötigt. Die zugehörigen Ventiltreiber oder Verstärkerstufen werden von dem Microcomputer über einen Interface-Baustein oder über diskrete Elektronik parallel angesteuert. Dies hat einen erheblichen Verdrahtungsaufwand zur Folge, zumal noch jeweils Ansteuerungs- und Rückmeldungsleitungen hinzukommen.

Der Erfindung liegt nun die Aufgabe zugrunde, diesen Verdrahtungsaufwand, den Pinbedarf (Bedarf an Anschlußstellen, insbesondere an den integrierten Schaltkreisen) und damit die Herstellungskosten einer solchen Schaltung erheblich zu verringern.

Es hat sich herausgestellt, daß diese Aufgabe durch eine Schaltungsanordnung der eingangs genannten Art gelöst werden kann, deren Besonderheit darin besteht, daß die Verstärkerstufen als sogen. "intelligente" Leistungstreiber ausgebildet sind und im wesentlichen aus einem Leistungsverstärker mit integrierter Steuerungs- und Überwachungselektronik bestehen, und daß die Verstärkerstufen derart zusammengeschaltet sowie über eine synchrone, serielle Schnittstelle derart an die Steuereinheit angeschlossen sind, daß ein Datentransfer in einer geschlossenen Schleife oder Kette von der Steuereinheit über die Verstärkerstufen und zurück zu einem seriellen Eingang der Steuereinheit verläuft, wobei außerdem zur Steuerung des Datentransfers ein Anschluß für einen Arbeitstakt und für einen Aktivierungs- oder Übertragungsbefehl vorhanden sind.

Erfindungsgemäß werden also die geschilderten Nachteile bekannter Schaltungsanordnungen dieser Art überwunden und eine Reduzierung des Herstellungsaufwandes durch die besondere Ausbildung der Leistungs-IC und durch den Übergang zu einem seriellen Datentransfer über die zu einer geschlossenen Schleife zusammengeschalteten Verstärkerstufen erreicht; die Daten werden über diese Schleife zu einem seriellen Eingang der Steuereinheit zurückgeführt. Der Vergleich der seriellen Ausgangssignale der Steuereinheit mit den Eingangssignalen dieser Steuereinheit erlaubt Rückschlüsse auf die ordnungsgemäße Funktion aller Schaltkreise.

Nach einer vorteilhaften Ausführungsart der Erfindung sind die Verstärkerstufen für die Aufnahme und Weiterleitung der Daten zu den nachgeschalteten Verstärkerstufen bzw. zurück zu der Steuereinheit mit Schieberegister ausgerüstet, wobei jeder Verstärkungsstufe eine Stelle in dem seriellen Datenwort, mit dem der Datentransfer von der Steuereinheit über die von den Verstärkerstufen gebildete geschlossene Schleife erfolgt, zugeordnet ist.

Ein weiteres Ausführungsbeispiel der Erfindung besteht darin, daß jede Verstärkerstufe mit einem Sollwertspeicher ausgerüstet ist und daß, nachdem die Daten in die Schieberegister transferiert sind, durch einen gemeinsamen Übertragungsbefehl die im Schieberegister gespeicherten Befehle in den Sollwertspeicher übertragbar und durch entsprechende Ansteuerung der Leistungsverstärker ausführbar sind. Weiterhin wird vorgeschlagen, jede Verstärkerstufe mit einem Istwertspeicher auszurüsten, dem über eine Spannungsüberwachungsschaltung der Pegel am Ausgang des Leistungsverstärkers als Istwert zuführbar ist, und die Schaltungsanordnung derart auszulegen, daß durch den gemeinsamen Übertragungsbefehl die Istwerte in die Schieberegister übertragbar sind und aus diesen beim Datentransfer in der geschlossenen Schleife zurück zur Steuereinheit gelangen. Durch Auswertung der Istwerte läßt sich dann unmittelbar erkennen, ob Fehler vorliegen.

Schließlich ist es erfindungsgemäß noch vorgesehen, jeweils eine, zwei oder drei komplette Verstärkerstufen in einen integrierten Schaltkreis unterzubringen.

Weitere Merkmale, Vorteile und Anwendungsmöglichkeiten der Erfindung gehen aus der folgenden Beschreibung eines Ausführungsbeispiels anhand der beigefügten Abbildungen hervor.

Es zeigen
- Fig. 1: den grundsätzlichen Aufbau und die wesentlichen Baugruppen einer Schaltungsanordnung nach der Erfindung und
- Fig. 2: im Blockschaltbild den prinzipiellen Aufbau eines Ausführungsbeispiels einer Verstärkerstufe der Schaltungsanordnung nach Fig. 1.

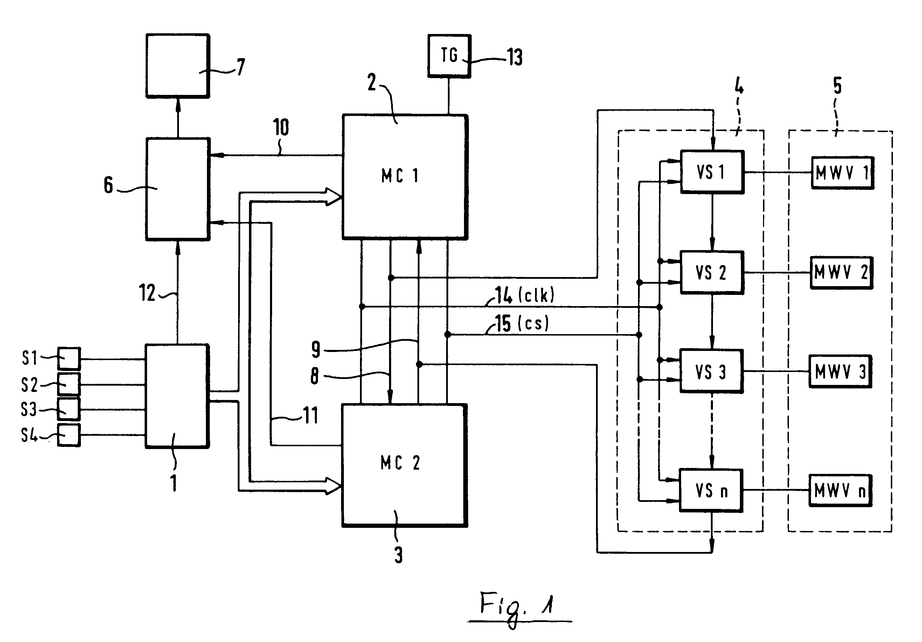

Die Schaltungsanordnung nach Fig. 1 ist Bestandteil eines elektronischen Antiblockiersystems. Sie dient zur Auswertung der mit Hilfe von Radsensoren S1 - S4 gewonnenen Informationen über das Drehverhalten der einzelnen Fahrzeugräder und zur Erzeugung von Bremsdruck-Steuersignalen, mit denen elektromagnetisch betätigbare Mehrwegeventile MWV1 - MWVn angesteuert werden. Mit Hilfe dieser Ventile, mit denen der Bremsdruck in den Radbremsen gesteuert wird bzw. in Abhängigkeit von dem Drehverhalten der Räder geregelt wird, läßt sich bekanntlich ein Blockieren der Räder verhindern und dennoch ein möglichst hoher Bremsdruck aufrechterhalten, um ein wirkungsvolles Bremsen mit kurzem Bremsweg zu erreichen.

Die wesentlichen Komponenten der dargestellten Schaltungsanordnung sind eine Triggerschaltung 1, in der die Ausgangssignale der Radsensoren S1 - S4 aufbereitet und gewandelt werden, und zwei Microcomputer 2,3 zur Erzeugung von Bremsdruck-Steuersignalen. Diese Signale werden Verstärkerstufen VS1 - VSn, die in ihrer Gesamtheit mit 4 bezeichnet sind, zugeführt. Die Verstärkerstufen erzeugen schließlich in Abhängigkeit von den Ausgangssignalen der Microcomputer 2,3 Betätigungssignale für die elektromagnetisch betätig- baren, zu einem Block 5 zusammengefaßten Mehrwegeventile MWV1 - MWVn. Außerdem ist ein Überwachungsschaltkreis 6 vor- handen, der mit Hilfe einer Relaisschaltung 7 oder dergl. die Stromversorgung unterbricht, wenn eine Fehlfunktion festgestellt wird, und dadurch die Blockierschutzregelung abschaltet. Dadurch wird in bekannter Weise sichergestellt, daß auch bei einem Fehler in der Elektronik die Bremse, wenn auch ohne Regelung, in Funktion bleibt.

In dem dargestellten Ausführungsbeispiel werden die in der Triggerschaltung 1 aufbereiteten Sensorsignale in beiden Microcomputern 2,3 auf gleiche Weise verarbeitet und ausgewertet. Die Daten werden zwischen den beiden Microcomputern 2,3 über Signalleitungen 8,9 ständig ausgetauscht und auf Übereinstirnung geprüft. Liegt keine Übereinstimmung vor, wird dies über die Leitungen 10 und 11 dem Überwachungsschaltkreis 6 mitgeteilt, der daraufhin die Abschaltung der Regelung über die Stufe 7 aktiviert. Auch ein Fehler im Trigger-Schaltkreis 1 wird über die Leitung 12 dem Warnschaltkreis gemeldet und führt zur Abschaltung der Regelung.

Außerdem ist noch ein Taktgeber 13 dargestellt, der den Arbeitstakt für die Microcomputer 2,3 und über die Leitung 14 für die Verstärkerstufen 4 liefert.

Erfindungswesentlich ist die Ausbildung und Ansteuerung der einzelnen Verstärkerstufen VS1 - VSn. Diese Verstärkerstufen sind nämlich als sogen. "intelligente Leistungstreiber" ausgebildet und bestehen im Prinzip aus einem Leistungsverstärker mit einer integrierten Steuerungs- und Überwachungselektronik. Auf einem einzelnen Chip bzw. in einem integrierten Schaltkreis sind jeweils ein, zwei oder drei Verstärkerstufen dieser Art untergebracht. Die Anzahl der benötigten Verstärkerstufen bzw. der benötigten Chips wird von der Anzahl der angeschlossenen Verbraucher bestimmt. In Fig. 1 sind als Verbraucher nur die elektromagnetisch betätigbaren Mehrwegeventile eines ABS dargestellt, doch können über dieser Verstärkerstufen z.B. auch die Hydraulikpumpe eines ABS oder eines Fahrwerkregelungssystems oder auch andere Verbraucher angesteuert werden.

Die einzelnen Verstärkerstufen VS1 - VSn des Blockes 4 sind in bezug auf den Datentransfer hintereinander geschaltet und an einen seriellen Ausgang des Microcomputers 2(3) angeschlossen oder, allgemeiner formuliert, über eine synchrone, serielle Schnittstelle mit dem Microcomputer 2(3) verbunden. Der Datentransfer erfolgt in Form einer geschlossenen Schleife oder Kette, da das letzte Glied dieser Kette bzw. der Ausgang der Verstärkerstufe VSn zu einem seriellen Eingang des Microcomputers 2(3) zurückgeführt ist.

An dem seriellen Ausgang des Microcomputers 2(3) stehen die Informationen in Form von Datenworten zur Verfügung. Die Zuordnung der einzelnen Verstärkerstufen ist derart gewählt, daß jeder Verstärkerstufe VS1 - VSn eine Stelle in dem seriellen Datenwort, mit dem der Datentransfer von den Microcomputern zu den Verstärkerstufen erfolgt, zugeordnet ist.

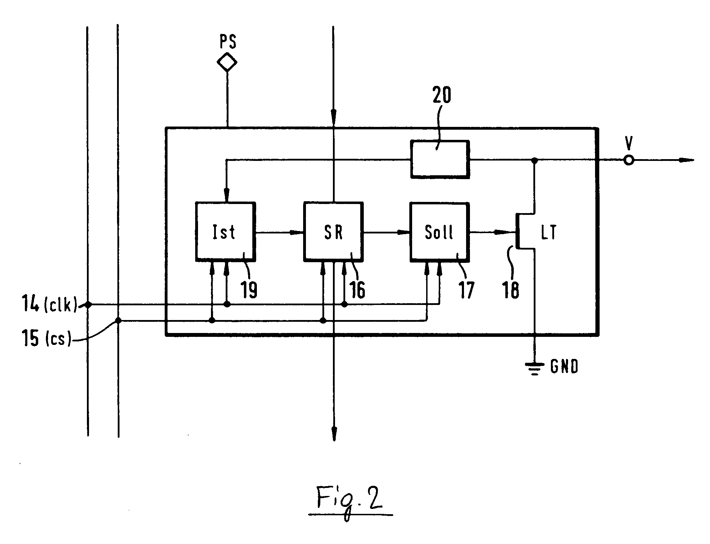

Die einzelnen Verstärkerstufen enthalten Schieberegister 16 (siehe Fig. 2), die im Arbeitstakt clk die Signale aufnehmen und weitergeben. Da es sich um eine geschlossene Schleife handelt, werden die Daten mit der folgenden Übertragung eines Datenwortes in die Steuereinheit, das ist hier der Microcomputer 2(3), zurückgeschoben.

Die einzelnen Verstärkerstufen sind, wie gesagt, seriell in den Datenfluß geschaltet. Sie sind außerdem parallel an dem Arbeitstakt oder clk über die Leitung 14 und außerdem, ebenfalls parallel, an eine Leitung 15, die einen gemeinsamen Übertragungsbefehl liefert, angeschlossen. Nachdem die Daten in den Schieberegistern der einzelnen Verstärkerstufen eingeschrieben sind, wird jeweils durch einen gemeinsamen Befehl über die Leitung 15 das jeweilige Signal in einen Sollwertspeicher 17 der Verstärkerstufen übertragen und außerdem der Befehl durch entsprechende Ansteuerung der Verbraucher 5 ausgeführt; anhand der Fig. 2 wird dies anschließend näher erläutert.

Fig. 2 dient zur Veranschaulichung der Wirkungs eise der einzelnen Verstärkerstufen VS1 - VSn. Jede Verstärkerstufe enthält, wie bereits erläutert, ein Schieberegister 16. Der Inhalt dieses Schieberegisters wird durch den Übertragungsbefehl in einen Sollwertspeicher 17 transferiert, der unmittelbar durch Ansteuerung eines Leistungstransistors 18, der wiederum über einen Anschluß V mit dem Verbraucher, z.B. einem Magnetventil, verbunden ist, den Befehl ausführt. Außerdem ist in jeder Verstärkerstufe ein Istwertspeicher 19 enthalten, der nach Ausführung der Befehle den tatsächlichen Zustand des Leistungstransistors 18 durch eine Spannungsüberwachungsschaltung 20 registriert und mit dem nächsten Speicherimpuls in das Schieberegister 16 überträgt. Dies hat zur Folge, daß nun beim nächsten Datentransfer der Istwert zum nächsten Schieberegister und schließlich zurück zur Steuereinheit, nämlich zum Microcomputer 2(3), weitergegeben wird. Durch Vergleich des ursprünglichen Befehls und dieses Istwertes sind bei der Signalauswertung Fehlerfunktionen erkennbar. Das Übertragen des Istwertes in das Schieberegister 16 und Weiterleiten dieses Wertes in dem seriellen Datenweg und zurück in die Steuereinheit bzw. zu dem Microcomputer 2(3), stellt folglich eine besonders einfache und wirkungsvolle Art und Weise der Überwachung des elektronischen Systems dar.

Die erfindungsgemäße Schaltungsanordnung besitzt zahlreiche Vorzüge im Vergleich zu den bereits beschriebenen bekannten Schaltungsanordnungen mit paralleler Ansteuerung der einzelnen Verstärkerstufen. Der verringerte Verdrahtungsaufwand erweist sich sowohl bei kompaktem Aufbau eines kompletten Reglers als auch bei dezentraler Unterbringung der einzelnen Komponenten als großer Vorteil. Die einzelnen, hintereinandergeschalteten Verstärkerstufen können durchaus im großen Abstand voneinander untergebracht werden. Die geschlossene serielle Schleife erlaubt eine zuverlässige Überwachung, weshalb ein System, das eine solche Schaltungsanordnung besitzt, besonders funktionssicher ist. Es kann eine für alle praktisch vorkommenden Fälle ausreichende Anzahl von Verstärkerstufen hintereinandergeschaltet werden.

## Patentansprüche

1. Schaltungsanordnung zur Steuerung einer größeren Anzahl von elektrischen oder elektromechanischen Verbrauchern, z.B. der elektrisch angetriebenen Hydraulikpumpen, der elektromagnetisch betätigbaren Mehrwegeventile etc. eines Kraftfahrzeug-Regelungssystems, bei der die mit Hilfe einer elektronischen Steuereinheit erzeugten Steuersignale über Verstärkerstufen den Verbrauchern zuführbar sind, dadurch **gekennzeichnet**, daß die Verstärkerstufen (4; VS1 - VSn), die als. "intelligente Leistungstreiber" bezeichnet werden, aus einem Leistungsverstärker mit integrierter Steuerungs- und Überwachungselektronik (16 - 19) bestehen, und daß die Verstärkerstufen (4; VS1 - VSn) derart zusammengeschaltet sowie über eine synchrone; serielle Schnittstelle derart an die Steuereinheit (2,3) angeschlossen sind, daß ein Datentransfer in einer geschlossenen Schleife oder Kette von der Steuereinheit über die Verstärkerstufen (4; VS1 - VSn) und zurück zu einem seriellen Eingang der Steuereinheit verläuft, wobei außerdem zur Steuerung des Datentransfers Anschlüsse (14,15) für einen Arbeitstakt (clk) und für einen Aktivierungs- oder Übertragungsbefehl (cs = chip select) vorhanden sind.

2. Schaltungsanordnung nach Anspruch 1, dadurch **gekennzeichnet**, daß die Verstärkerstufen (4; VS1 - VSn) für die Aufnahme und Weiterleitung der Daten zu der nachgeschalteten Verstärkerstufe bzw. zurück zu der Steuereinheit (2,3) mit Schieberegister (16) ausgerüstet sind und daß jeder Verstärkerstufe (4; VS1 - VSn) eine Stelle in dem seriellen Datenwort, mit dem der Datentransfer von der Steuereinheit (2,3) über die von den Verstärkerstufen (4; VS1 - VSn) gebildete geschlossene Schleife erfolgt, zugeordnet ist.

3. Schaltungsanordnung nach Anspruch 1 oder 2, dadurch **gekennzeichnet**, daß jede Verstärkerstufe (4; VS1 -VSn) mit einem Sollwertspeicher (17) ausgerüstet ist und daß, nachdem die Daten in die Schieberegister (16) transferiert sind, durch einen für alle Verstärkerstufen (4; VS1 - VSn) gemeinsamen Übertragungsbefehl die im Schieberegister (16) gespeicherten Befehle in den Sollwertspeicher (17) übertragbar und durch entsprechende Ansteuerung der Leistungsverstärker (18) ausführbar sind.

4. Schaltungsanordnung nach Anspruch 3, dadurch **gekennzeichnet**, daß jede Verstärkerstufe (4; VS1 - VSn) zusätzlich mit einem Istwertspeicher (19) ausgerüstet ist, dem über eine Spannungsüberwachungsschaltung (20) der Pegel am Ausgang des Leistungsverstärkers (18) als Istwert zuführbar ist, und daß durch den gemeinsamen Übertragungsbefehl die Istwerte in die Schieberegister (16) übertragbar sind und aus diesen beim Datentransfer in der geschlossenen Schleife zurück zur Steuereinheit (2) gelangen.

5. Schaltungsanordnung nach einem oder mehreren der Ansprüche 1 - 4, dadurch **gekennzeichnet**, daß jeweils ein, zwei oder drei komplette Verstärkerstufen (VS1 - VSn) in einem integrierten Schaltkreis untergebracht sind.

## Claims

1. A circuit configuration for controlling a major number of electric or electromechanical consumers such as the electrically driven hydraulic pumps, the electromagnetically operable multi-directional valves, etc., of an automotive vehicle control system, where the control signals are generated by means of an electronic control unit and can be delivered to the consumers via amplifier stages,
**characterized** in that the amplifier stages (4; VS1 - VSn), which are termed as "intelligent power drivers", consist of a power amplifier with integrated electronic controls and monitors (16 - 19), and in that the amplifier stages (4; VS1 - VSn) are interconnected as well as, via a synchronous serial interface, connected to the control unit (2, 3) so that a data transfer flows in a closed loop or chain from the control unit, via the amplifier stages (4; VS1 - VSn) and back to a serial entry of the control unit, while, further, for controlling the data transfer, connections (14, 15) of an operating cycle (clk) and of an activation instruction or a transfer instruction (cs = chip select) are provided.

2. A circuit configuration as claimed in claim 1,
**characterized** in that the amplifier stages (4; VS1 - VSn) for receiving and transferring the data to the following amplifier stage or back to the control unit (2, 3) are equipped with shift registers (16), and in that each of the amplifier stages (4; VS1 - VSn) is assigned a position in the serial data word, by means of which data transfer takes place from the control unit (2, 3) via the closed loop formed by the amplifier stages (4; VS1 - VSn).

3. A circuit configuration as claimed in claim 1 or in claim 2,
**characterized** in that each of the amplifier stages (4; VS1 - VSn) is equipped with a nominal value memory (17), and in that, after data transfer into the shift registers (16), the instructions stored in the shift register (16) are transferrable into the nominal value memory (17) by means of a transfer instruction, which all amplifier stages (4; VS1 - VSn) have in common, and are implementable by means of corresponding actuation of the power amplifiers (18).

4. A circuit configuration as claimed in claim 3,
**characterized** in that, additionally, each of the amplifier stages (4; VS1 - VSn) is equipped with an actual value memory (19) to which the level at the outlet of the power amplifier (18) can be fed as actual value via a voltage monitoring circuit (20), and in that, by means of the common transfer instruction, the actual values are transferrable into the shift registers (16) and are returned to the control unit (2) during data transfer in the closed loop.

5. A circuit configuration as claimed in one or in several of claims 1 to 4,
**characterized** in that one, two or three complete amplifier stages (VS1 - VSn) are accommodated in one integrated circuit at a time.

## Revendications

1. Montage pour la commande d'un nombre assez important d'appareils d'utilisation électriques ou électromagnétiques, par exemple des pompes hydrauliques entraînées électriquement, des vannes à plusieurs voies, pouvant être actionnées de façon électromagnétique, un système de régulation de véhicule automobile, et dans lequel les signaux de commande produits au moyen d'une unité de commande électronique peuvent être envoyés aux appareils d'utilisation par l'intermédiaire d'étages amplificateurs, caractérisé en ce que les étages amplificateurs (4; VS1-VSn), qui sont désignés comme étant des "étages de commande de puissance intelligents", sont constitués par un amplificateur de puissance comportant un système électronique intégré de commande et de contrôle (16-19), et que les étages amplificateurs (4; VS1-VSn) sont interconnectés et raccordés, par l'intermédiaire d'une interface série synchrone, à l'unité de commande (2,3), de telle sorte qu'un transfert de données est exécuté dans une boucle ou chaîne fermée partant de l'unité de commande, passant par les étages amplificateurs (4; VS1-VSn) et revenant à une entrée série de l'unité de commande, les bornes (14,15) pour une cadence de travail (clk) et pour une instruction d'activation de transmission (cs = chip select, c'est-à-dire sélection de microplaquette) étant en outre présentes pour la commande du transfert de données.

2. Montage suivant la revendication 1, caractérisé en ce que les étages amplificateurs (4;VS1-VSn) pour la réception et la retransmission des données à l'étage amplificateur branché en aval ou le renvoi des données à l'unité de commande (2,3) sont équipés de registres à décalage (16) et qu'à chaque étage amplificateur (4;VS1-VSn) est associé un chiffre dans le mot de données en série, au moyen duquel le transfert des données est exécuté par l'unité de commande (2,3) par l'intermédiaire de la boucle fermée constituée par les étages amplificateurs (4;VS1-VSn).

3. Montage suivant la revendication 1 ou 2, caractérisé en ce que chaque étage amplificateur (4; VS1-VSn) est équipé d'une mémoire (17) de valeurs de consigne et que, après que les données aient été transférées dans les registres à décalage (16), les instructions mémorisées dans le registre à décalage (16) peuvent être transférées dans la mémoire (17) de valeurs de consigne, au moyen d'une instruction de transmission commune à tous les étages amplificateurs (4; VS1-VSn), et peuvent être exécutées au moyen d'une commande correspondante des amplificateurs de puissance (18).

4. Montage suivant la revendication 3, caractérisé en ce que chaque étage amplificateur (4; VS1-VSn) est équipé en outre d'une mémoire (19) de valeurs réelles, à laquelle le niveau présent à la sortie de l'amplificateur de puissance (18) peut être envoyé en tant que valeur réelle, par l'intermédiaire d'un circuit de contrôle de tension (20), et que les valeurs réelles peuvent être transférées dans les registres à décalage (16) au moyen d'instructions communes de transmission et reviennent, à partir de ces registres, a l'unité de commande (2), lors du transfert de données dans la boucle fermée.

5. Montage suivant une ou plusieurs des revendications 1-4, caractérisé en ce que respectivement un, deux ou trois étages amplificateurs complets (VS1-VSn) sont logés dans un circuit intégré.
